# EUROPÄISCHE PATENTSCHRIFT

(11) **EP 0 528 197 B1**
(45) Veröffentlichungstag und Bekanntmachung des Hinweises auf die Patenterteilung: **19.07.1995**
(21) Anmeldenummer: 92112522.5
(22) Anmeldetag: 22.07.1992
(51) Int. Cl.: G01B 11/00, G21C 21/02, B65G 15/10, B65G 47/31

(54) **Verfahren und Vorrichtung zur Inspektion von Tabletten**
Method and device for the inspection of tablets
Procédé et dispositif pour l'inspection de tablettes

(30) Priorität: 23.07.1991 DE 4124278; 22.04.1992 DE 4213180
(43) Veröffentlichungstag der Anmeldung: 24.02.1993
(73) Patentinhaber: ADVANCED NUCLEAR FUELS GmbH, D-49784 Lingen (DE)
(72) Erfinder: Osseforth, Ewald, W-4455 Wiethmarschen (DE)
(74) Vertreter: Hoffmeister, Helmut, Dr. Dipl.-Phys.

(56) Entgegenhaltungen:
- EP-A- 0 150 889
- EP-A- 0 206 985
- EP-A- 0 385 245
- DE-A- 3 309 584
- DE-A- 3 524 666
- DE-A- 3 816 322
- DE-A- 3 942 304

## Beschreibung

Die Erfindung betrifft ein Verfahren und eine Vorrichtung zur optischen Prüfung von Tabletten, gemäß den Oberbegriffen der Ansprüche 1 bzw. 8.

Bei der Produktion von Tabletten, wie sie insbesondere bei der Füllung von Brennstoffelementen (Brennstoffstäben) in Kernkraftwerken verwendet werden, ist eine höchste Präzision der Tablettenabmessungen gefordert. Nicht geeignete Tabletten, die beispielsweise aus gepreßtem, angereichertem Uranoxid bestehen, müssen vor der Füllung der Brennstoffstäbe zuverlässig eliminiert werden. Eine Vorrichtung zur Inspektion derartiger Tabletten ist in der DE-A-3 309 584 beschrieben. Ein Stapel von Tabletten wird suksessive vorgeschoben und bewegt sich in der Mulde, die von zwei rotierenden Wellen gebildet wird, um seine eigene Achse. Eine erste Beleuchtungseinrichtung bestrahlt die Oberfläche der Tabletten. Das reflektierte Licht wird durch ein optisches System und von lichtempfindlichen Elementen eines Lichtdetektors empfangen. Die auf die fotoempfindlichen Elemente des Lichtdetektors projizierten Lichtstrahlen enthalten Informationen hinsichtlich der Oberfläche der Tabletten.

Bei seiner Vorwärtsbewegung erreicht der Tablettenstapel einen in den Wellen eingebrachten Spalt. Eine zweite Beleuchtungseinrichtung gibt über ein System von Spiegeln und Linsen nacheinander einen Laserstrahl durch den Spalt, der umgelenkt, gebündelt und auf lichtempfindliche Elemente eines zweiten Lichtdetektors gegeben wird. Hierbei wird der Strahl so gelenkt, daß er zum einen die vor ihm rotierenden Wellen nicht berührt und zum anderen durch die auf den rotierenden Wellen rotierende Tablette etwa um die Hälfte gedämpft wird. Die Signalvariation des Lichtdetektors wird dazu benutzt, den Beginn oder das Ende der Tablette anzuzeigen, ihre Zahl zu zählen und ihre Länge zu vermessen, wenn die lineare Tablettengeschwindigkeit bekannt ist. Außerdem können die abgegebenen Signale dazu benutzt werden, um mit einer datenverarbeitenden Schaltung einen Tablettendurchmesser zu errechnen und Informationen darüber zu erhalten, ob die Tablette einem kompletten zylindrischen Körper entspricht.

Ein Nachteil der bekannten Vorrichtung ist, daß die Oberfläche der Tablette zwar detektierbar ist, die übrigen Maße aber nur indirekt feststellbar sind. Hinzu kommt, daß zum Detektieren eine hohe Anzahl von Einzelteilen, die vor allem das optische System betreffend benötigt werden, die darüberhinaus teilweise noch verstellbar sind. Das hat zur Folge, daß die Meßergebnisse nicht immer genau sind. Ein weiterer Nachteil ist, daß es nur möglich ist, die Tabletten als Tablettenstapel zu untersuchen, so daß ein Ausstoßen einzelner Tabletten nicht möglich ist.

Weiterhin ist aus der DE-A-2 659 461 ein Verfahren und eine Vorrichtung zum automatischen Prüfen und Sortieren von Tabletten bekannt. Hierbei werden die von einer Schleifmaschine kommenden Tabletten mit Hilfe einer geneigten V-förmigen Tablettenzuführungsrinne, die einen Vibrator trägt, zu einer Prüfzone gefördert. Bevor die Tabletten die Prüfzone erreichen, ist in der Zuführungsrinne eine Öffnung vorgesehen, durch die die Tabletten fallen, die kleiner als eine normale Tablette sind. In der Prüfzone werden die Tabletten nacheinander zwischen zwei drehende Walzen geschoben und geradlinig durch eine Rollenkette mit nach oben ragenden Stützen entlang des Walzenpaares weiterbewegt. Dabei wird jede Tablette durch eine optische Sonde auf Löcher, Risse, Ausbrüche und andere Oberflächenfehler abgetastet und die aufgenommenen Werte in eine Meßwertauswertung eingegeben. In die Meßwertauswertung ist eine Steuereinrichtung integriert, die eine Aussortiereinrichtung ansteuert, wenn eine Tablette als Ausschuß erkannt wird.

Nachteilig ist, daß durch das Abtasten der Oberfläche mit Hilfe der optischen Sonde nicht alle Fehler erkannt werden können, weil die Tabletten sich beim Rotieren an den Stützen der Rollenkette reiben und sich bei Ausbuchtungen am Tablettenrand verhaken und stehenbleiben können. Nachteilig ist darüber hinaus, daß von normalen Tabletten Abweichungen nur mit Hilfe einer Öffnung aussortiert werden. Nachteilig ist außerdem, daß als Tablettensäule ankommende Tabletten teilweise nur nebeneinanderliegend geprüft werden können.

Aus EP-A-0 385 245 ist eine Vorrichtung zum Vereinzeln von aneinander anliegenden Einzelstücken bekannt. Sie besteht aus einem Zuförderer, einem Stauförderer, einem Beschleunigungsförderer, der auf dem Stauförderer aufliegende Gegenstände vereinzelt, und einem Abförderer. Alle Förderer sind nebeneinander und in einer Ebene liegend angeordnet. Oberhalb zwischen Beschleunigungsförderer und Abförderer ist eine Transportkette mit angelenkten Mitnehmern angeordnet, die die Einzelstücke auf dem Beschleunigungsförderer erfaßt und auf diese Art und Weise die Vereinzelung sichert. Damit eine allfällige Verschiebung zwischen einem Einzelstück und einem Mitnehmer ausgeglichen werden kann, ist ein Unterdruckkanal wirksam. Auf dem Abförderer, der die vereinzelten Gegenstände zu einer Verpackungsmaschine Transportiert, sind ebenfalls Mitnehmer angeordnet.

Nachteilig ist, daß die Vorrichtung nur zum Vereinzeln flächenförmiger Gegenstände einsetzbar ist. Von einer Tablettensäule ankommende Tabletten können aufgrund ihrer gerundeten Konfiguration von den einzelnen Förderern herunterrollen. Ist darüber hinaus der Durchmesser der Tabletten größer als die Länge, kippt die Tablette um. Eine einwandfreie Prüfung mit anschließender Sortierung ist damit nicht möglich.

Der Erfindung liegt die Aufgabe zugrunde, ein Verfahren und eine Vorrichtung zur genauen und detaillierten Inspektion von Tabletten anzugeben, die einfach und genau in der Handhabung und sicher in der Wirkungsweise sind.

Die Lösung dieser Aufgabe ist erfindungsgemäß bei einem Verfahren der eingangs genannten Art möglich, das dadurch gekennzeichnet ist, daß
a) die Geschwindigkeit der zu einer liegenden Tablettensäule gehörenden vordersten Tablette, die von einer Bearbeitungsmaschine, beispielsweise Schleifmaschine kommt, mit der Geschwindigkeit eines Mitnehmers eines Mitnehmersystems in einem Steuerrechner verglichen wird und entsprechend dem Ergebnis ein System von zusammenarbeitenden Gurten, das die Tablette erfaßt, so beschleunigt wird, daß eine Tablette von einem Mitnehmer hinterfaßt wird,
b) die vereinzelte Tablette durch den Mitnehmer auf die beiden rotierenden Wellen geschoben und vereinzelt durch das Gesichtsfeld geführt wird,
c) daß die Meßwertauswertung das Ergebnis des Vergleichs der Meßdaten der Laser-Kameras mit den eingespeicherten Sollwerten an einen Rechner weitergibt,
d) die Tablette in einer weiteren Beobachtungsstation von einer Beleuchtungseinheit angestrahlt wird und Bilder ihrer Oberfläche von einer Zeilenkamera aufgenommen werden,
e) die aufgenommenen Bilder der Zeilenkamera der Meßwertauswertung zugeführt werden, die diese Daten mit eingespeicherten Sollwerten vergleicht und an den Rechner weitergibt,
f) die an den Rechner weitergegebenen Tablettenvergleichsdaten gesammelt werden und der Rechner fehlerfreie Tabletten zur weiteren Verwendung weitergibt, fehlerbehaftete Tabletten aussortiert und/oder die Bearbeitungsmaschine so steuert, daß während der Bearbeitung beobachtete Fehler bei der Bearbeitung weiterer Tabletten abgestellt werden.

Die gemäß Verfahrensanspruch vereinzelten Tabletten ergeben den Vorteil, daß jede einzelne Tablette für sich abgetastet und abgebildet wird. Durch das Vergleichen der aufgenommenen Daten wird dann über diese einzelne Tablette nach Bewertungskriterien entschieden. Dabei werden im Ergebnis der Vermessung nicht nur den Bewertungskriterien nicht entsprechende Tabletten ausgesondert, sondern darüberhinaus auch mögliche Fehlerquellen beseitigt.

In weiterer Ausgestaltung des Verfahrens klemmt der Obergurt der Gurtanordnung die Tablette beim Einfahren immer, wenn die Tablette in V-förmig angeordneten Gurten beschleunigt oder abgebremst wird, wobei der Obergurt die Geschwindigkeit der V-förmig angeordneten Gurte exakt annimmt.

Dadurch ist gesichert, daß jede Tablette immer liegend und nicht verkantet vereinzelt wird.

Um die Oberfläche der Tablette begutachten zu können, wird mit einer Zeilenkamera eine Mantelabwicklung der Tablette aufgenommen. Dadurch sind kleinste Veränderungen sofort und deutlich feststellbar.

Genaue Abmessungen der Tablette werden dadurch gewonnen, daß durch die Laser-Kameras der Durchmesser und durch die Zeilenkamera die Länge der Tablette erfaßt wird.

Um genaue Werte zu erhalten, wird eine hochpräzise Stahltablette ausgemessen und deren Abmessungen als Kalibermaß im Speicher der Meßwertauswertung und des Rechner abgelegt, mit der alle Meßungen verglichen und der wirkliche Wert errechnet wird. Das hat den Vorteil, daß ohne zusätzlichen Eichaufwand jederzeit ein meßtechnisches Normal abspeicherbar ist.

In weiterer Ausgestaltung gibt die Meßwertauswertung die errechneten Werte successive an den Rechner weiter, der damit einen kontinuierlichen Vergleich mit den Rückweiskriterien
- Tablette mit akzeptablem Durchmesser,
- Tablette mit maximaler Überschreitung,
- Tablette mit minimaler Überschreitung,
- Tablette mit "Wankeleffekt",
- Tablette mit Abplatzungen,
- Tablette mit akzeptabler Länge,
- Tablette mit Überlänge,
- Tablette mit Untermaß,
- Tablette mit Abplatzungen

innerhalb von eingegebenen Grenzwerten beginnen kann. Durch dieses successive Weitergeben der errechneten Werte wird die Berechnungsdauer und damit die Durchlaufzeit der Tablette verkürzt.

Weiterhin verstellt der Rechner in Abhängigkeit von den errechneten Rückweiskriterien und der Position einer Regelscheibe die Schleifmaschine so, daß damit ein Verändern des Durchmessers der Tablette erreicht wird. Das hat den Vorteil, daß die errechneten Rückweiskriterien nicht nur zur Aussonderung von fehlerbehafteten Tabletten führt, sondern mit ihnen auch die Ursache ausgesteuert wird.

Die Vorrichtung zur Durchführung des Verfahrens, das heißt zur optischen Prüfung der Oberfläche, der Rundheit und der Abmessungen von aufeinanderfolgenden Tabletten ist dadurch gekennzeichnet, daß den Laser-Kameras eine Vereinzelung vorgeordnet ist, die aus
- einem Transportsystem mit wenigstens zwei zueinander bewegbaren Flächen,
- einem Mitnehmersystem mit einer endlosen Transportfläche und wenigstens einer darauf angeordneten Erhöhung, das im wesentlichen parallel zum Transportsystem angeordnet ist,
- wenigstens einem Sensor der vorzugsweise am Anfang des Transportsystems oder im Bereich der Erhöhung liegt, und
- einem Steuer-Rechner besteht, der mit den zueinander bewegbaren Flächen und wenigstens einem der Sensoren verbunden ist und derart programmiert ist, daß er das Transport- und das Mitnehmersystem in folgenden Schritten ansteuert:
   a) Ermittlung der nächsten dem Transportsystem sich zuwendenden Erhöhung aus der durch die Sensoren erkannten Position einer Tablette und der Position der Erhöhung sowie der Relativgeschwindigkeit zwischen Transport- und Mitnehmersystem;
   b) Veränderung der Relativgeschwindigkeit zwischen Transport- und Mitnehmersystem auf einen solchen Wert, daß die erkannte Tablette im Transportsystem nicht verkantet und hinter die Erhöhung gelangt;
   c) Einstellen einer im wesentlichen synchronen Geschwindigkeit zwischen Transport- und Mitnehmer-system
- daß den Laser-Kameras eine Zeilenkamera mit einer Beleuchtungseinheit nachgeordnet ist und
- daß die Zeilenkamera an die Meßwertauswertung angeschlossen ist, und die Meßwertauswertung sowie ein Meßtaster für die Position einer Regelscheibe und ein Auswertegerät mit einem Rechner verbunden, sind.

Das hat den Vorteil, daß die Tablettensäule nach dem Schleifen insgesamt und dabei doch jede einzelne Tablette geprüft und in einwandfreiem Zustand verwendbar ist. Die Tablettensäule wird in einzelne Tabletten vereinzelt, die ohne zu verkanten vom Transportsystem transportiert werden. Die Form der Tablette muß dabei nicht unbedingt zylindrisch sein. Sie kann z. B. auch oval sein oder einen anderen, z. B. zackenförmigen, achteckigen, dreieckigen usw. Umfang haben. Auch die Breite ist ohne Bedeutung. Gerade Tabletten, die besonders schmal im Verhältnis zum Durchmesser sind, können ohne umzuschlagen bewegt werden. Die Geschwindigkeit der zueinander bewegbaren Flächen wird dabei durch den Steuer-Rechner so gesteuert, daß die Tablette hinter eine Erhöhung der endlosen Transportfläche gelangt, wodurch ein Wiederzusammenschieben der mit dem davor und dahinter liegenden Gegenstand und damit eine vorzeitige Säulenbildung verhindert wird.

In vorteilhafter Weise ist das Mitnehmersystem unter dem Transportsystem angeordnet. Dabei kann das Transportsystem ein Gurtsystem sein, in dem die zueinander bewegbaren Flächen Gurte sind. Möglich ist es auch, daß die zueinander bewegbaren Flächen als Rollen ausgebildet sind. Das hat den Vorteil, daß die zu vereinzelnde Tablette schnell und sicher erfaßt und transportiert werden kann.

Vorteilhaft ist es, wenn im Gurtsystem zwei Gurte V-förmig und der dritte waagerecht darüber angeordnet sind.

Das Transport- bzw. Gurtsystem kann selbstverständlich auch aus mehr als drei bewegbaren Flächen bzw. Gurten bestehen, die die Tablette gut zu erfassen in der Lage sind.

Sind im Gurtsystem drei Gurte angeordnet, hat die zu beschleunigende, abzubremsende und zu transportierende Tablette im Gurtsystem eine sichere Drei-Punkt-Lage.

Dabei ist es vorteilhaft, daß das Mitnehmersystem aus einem als Transportfläche ausgebildeten Förderband und darauf als Erhöhung befestigten Mitnehmern besteht. Diese Mitnehmer können dann in die V-förmig angeordneten Gurte eingreifen und damit hinter die zu vereinzelnde Tablette greifen.

Jeder der Gurte und das Förderband ist durch einen Motor angetrieben, dessen Drehzahl durch den Steuer-Rechner veränderbar ist. Dadurch ist es möglich, die Relativgeschwindigkeiten zwischen den Gurten und dem Förderband durch gleichzeitiges oder ungleichzeitiges Beschleunigen oder Abbremsen oder gleichförmiges Bewegen zueinander zu realisieren.

Vorteilhaft ist es, wenn die Drehzahl aller Gurtmotoren durch den Steuer-Rechner synchron veränderbar und darüber hinaus die Umlaufgeschwindigkeit des Förderbandes und damit die Umdrehungszahl des Motors etwa konstant ist. Dadurch ist es möglich, die Relativgeschwindigkeit zwischen dem Gurtsystem in einfacher Weise so zu lösen, daß nach dem Erkennen und Erfassen einer Tablette durch die Gurte diese gegenüber der konstanten Geschwindigkeit des Förderbandes so beschleunigt und/oder abgebremst werden, daß die zu vereinzelnde Tablette hinter und damit zwischen zwei Mitnehmer gelegt und durch die Gurte synchron zur Geschwindigkeit des Mitnehmersystems weiterbewegt wird.

Vorteilhaft ist es weiterhin, am Motor des Förderbandes einen Drehzahlindikator, z.B. einen Tachogenerator, anzuordnen. Dadurch ist es möglich, die Bewegung zwischen zwei Mitnehmern in gleichmäßige Schritte einzuteilen, die es dem Steuer-Rechner ermöglichen, dessen genaue Stellung im Verhältnis zum Gurtsystem bei einer Beschleunigung bzw. Abbremsung der Gurte festzustellen und daraus den sicheren Eingriff des Mitnehmers in die Gurte hinter die zu vereinzelnde Tablette zu realisieren.

Damit eine sichere Vereinzelung gewährleistet ist, sind die Mitnehmer in definierten Abständen auf dem Förderband angeordnet. Das hat den Vorteil, daß nach dem Eingreifen der zu vereinzelnden Tabletten diese immer zwischen zwei Mitnehmer gelegt werden und ihr vorzeitiges Zusammenschieben sicher vermieden wird.

Damit das Gesamtsystem sicher arbeiten kann, ist der erste Sensor unmittelbar am Anfang des Gurtsystems und der zweite Sensor im Bereich der Mitnehmer angeordnet. Das hat den Vorteil, daß die entscheidenden Meßpunkte für eine Vereinzelung bestimmt sind, nämlich der Eintreffzeitpunkt der Tablette in das Gurtsystem und der Standort des nächsten in die V-Gurte eintretenden Mitnehmers.

Vorteilhaft ist es, als Sensoren Lichtschranken zu verwenden, die eine einfache Erfassung und Signalweitergabe an den Steuer-Rechner ermöglichen. Der Rechner ist dabei vorteilaft als Einplatinen-Rechner ausgebildet.

Um eine schnelle Meßwertauswertung zu gewährleisten, ist in der Meßsystemauswertung ein Einschubrechner angeordnet. Das hat den Vorteil, daß bei geringer Platzbeanspruchung ein hochleistungsfähiges System bereit steht.

Weiterhin ist der Rechner mit einer Ausstoßvorrichtung verbunden, die Ausstoßvorrichtung selbst besteht aus zwei Magnetventilen mit Druckluftversorgung. Das hat den Vorteil, daß fehlerhafte Tabletten schnell und sicher ausgesondert werden.

Die Erfindung wird nachstehend an einem Ausführungsbeispiel näher erläutert. Es zeigen:
- Figur 1: eine Inspektionsanlage in schematischer Darstellung,
- Figur 2: ein Datenverarbeitungsschema einer Inspektionsanlage
- Figur 3a und b: einen Ausschnitt der Laser-Kameraanordnungen in der Inspektionsanlage nach Figur 1,
- Figur 4a: eine Vereinzelung einer Inspektionsanlage nach Figur 1 in schematischer Darstellung,
- Fibur 4b: eine Vereinzelung in Verknüpfung mit einem Steuer-Rechner in einer Seitenansicht, gesehen von der Tabletten-Bewegungsebene,
- Figur 4c: ein Gurtsystem in einer Seitenansicht, gesehen quer zur Tabletten-Bewegungsebene, in Verknüpfung mit einem Steuer-Rechner.

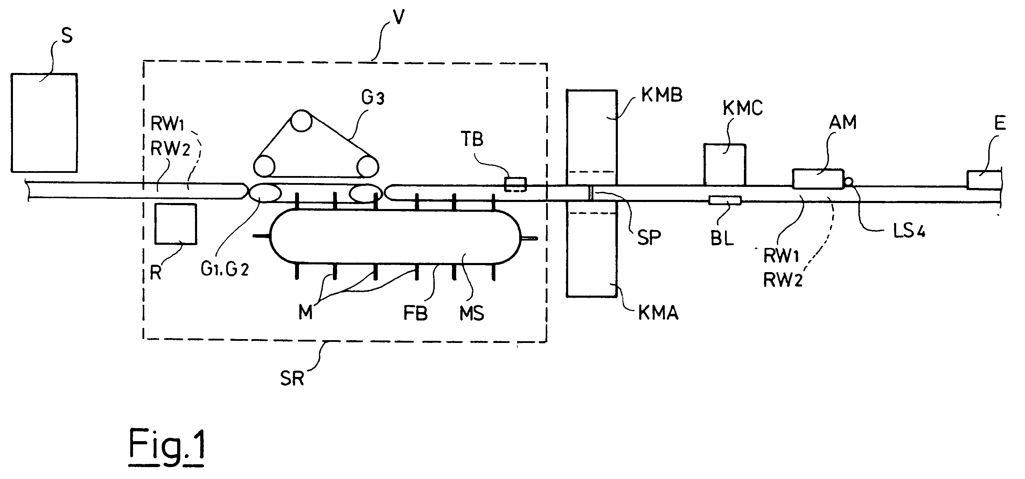

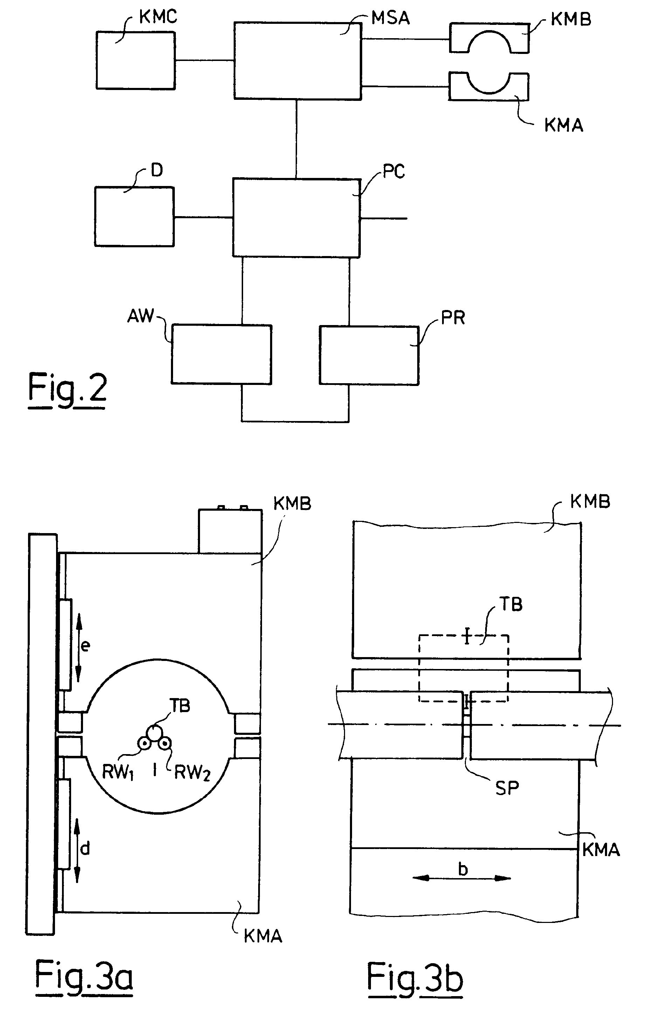

Eine Inspektionsanlage besteht nach Figur 1 aus einer Vereinzelung V, zwei Laser-Kameras KMA, KMB, einer Zeilenkamera KMC mit einer dazugehörigen Beleuchtungseinheit BL, einer Ausstoßeinrichtung AM, einem Endausstoß E und rotierenden Wellen RW1, RW2, die im Bereich der Laser-Kameras KMA, KMB, einen Spalt SP aufweisen. Zusätzlich kann noch eine dritte Laser-Kamera angeordnet sein. Nach Figur 2 arbeiten die Kameras KMA, KMB, KMC mit einer Meßwertauswertung MSA zusammen, die mit einem Rechner PC verbunden ist. Mit dem Rechner PC ist ein Drucker D sowie Meßtaster für die Position der Regelscheibe PR und ein Auswertgerät AW verbunden.

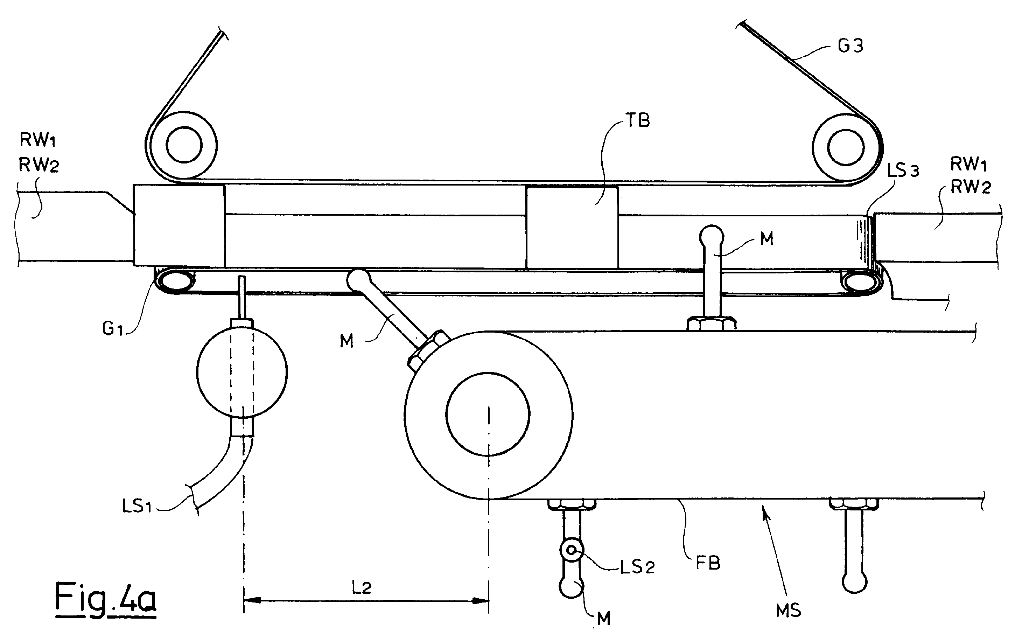

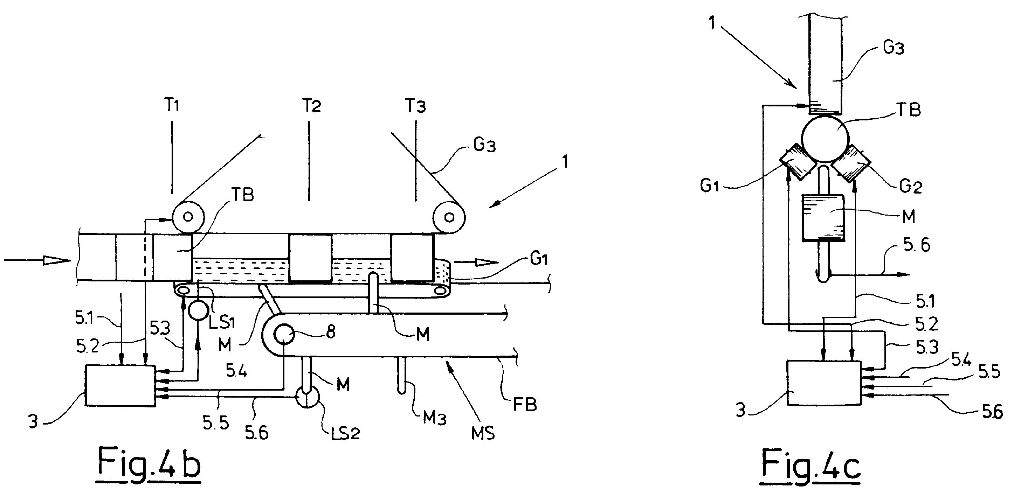

Die Tabletten TB werden in einer Schleifmaschine S bearbeitet und bewegen sich als Tablettensäule auf die Vereinzelung V zu. Nach den Figuren 4a bis 4c sind in der Vereinzelung V drei Lichtschranken LS1, LS2, LS3 angeordnet. In ihr arbeiten darüberhinaus zwei V-förmig angeordnete Gurte G1, G2 mit einem darüber liegenden Gurt G3 zusammen.

Der Öffnungswinkel der V-förmig angeordneten Gurte G1 und G2 schwankt dabei zwischen 60 und 120°. Bestimmend für die Wahl des Winkels ist die Konfiguration der zu vereinzelnden Gegenstände, die mitunter auch einen Winkel erfordern, der außerhalb des Vorzugs-Toleranzbereiches liegen kann. Für annähernd kreisrunde Gegenstände wurde ein Öffnungswinkel von ca. 90° als Vorzugsvariante gefunden. Über den beiden V-förmig angeordneten Gurten G1, G2 bewegt sich frei ein im wesentlichen senkrecht darüber liegender dritter Gurt G3, so daß ein Gurtsystem 1 entsteht. Um eine gleichmäßige Spannung des dritten Gurtes G3 zu sichern, läuft ständig mindestens eine nicht dargestellte Gurtrolle mit. Jeder der Gurte G1, G2 und G3 verfügt über einen drehzahlveränderlichen Antriebsmotor.

Unterhalb des Gurtsystems 1 bewegt sich das Mitnehmersystem MS. Es liegt etwas zurückgesetzt in der Tablettenbewegungsrichtung unterhalb der V-förmig angeordneten Gurte G1, G2. Am Anfang des Gurtsystems 1 ist eine Lichtschranke LS1 unter Einhaltung einer wählbaren Länge L2 angeordnet. Das Mitnehmersystem MS bewegt sich mit einer gleichmäßigen Umlaufgeschwindigkeit. Am Mitnehmersystem ist im Bereich des Antriebsmotors ein Drehzahlindikator 8 angeordnet. Unterhalb des Mitnehmersystems MS befindet sich eine zweite Lichtschranke LS2. Auf dem Förderband FB des Mitnehmersystems MS sind Mitnehmer M angeordnet. Die Anzahl der Mitnehmer M und ihr Abstand zueinander ist abhängig von der Konfiguration des zu vereinzelnden Gegenstandes, d. h. einer Tablette TB.

Die Motoren der Gurte G1, G2 und G3 des Gurtsystems 1, die Lichtschranke LS1 und LS2 und der Drehzahlindikator 8 sind über Steuerleitungen 5.1, ... 5.6 mit dem Steuer-Rechner 3 verbunden. Im Steuer-Rechner 3 ist ein Programm zur Steuerung insbesondere des Gurtsystems 1 installiert.

Die Vereinzelung der Tabletten TB vollzieht sich wie folgt:

Auf das Gurtsystem 1 bewegt sich eine Säule von zu vereinzelnden Tabletten TB zu, die unterschiedliche Konfiguration haben können, aber eine im wesentlichen zylindrische Form mit einem im wesentlichen kreisrunden Umfang haben.

Die erste Tablette TB wird von der Lichtschranke LS1 erkannt. Sie ist so eingestellt, daß sie die Tablette TB dann sieht, wenn sie gerade komplett im V-Gurt G1, G2 ist (dargestellt in Figur 4b durch die Lage T1). Währenddessen bewegt sich der Mitnehmer M auf dem Förderband FB so weiter, daß er in die V-Gurte G1, G2 eingreifen kann. Von den Lichtschranken LS1 und LS2 und dem Drehzahlindikator 8 werden über die Steuerleitungen dem Steuer-Rechner 3 Signale zugeführt. Der Steuer-Rechner 3 ermittelt aus diesen Signalwerten, wann der Mitnehmer in die V-Gurte G1, G2 eingreift und einen Beschleunigungs-bzw. Abbremsgeschwindigkeitswert für jeden der Antriebsmotoren der drei Gurte G1, G2 und G3, wodurch das komplette Gurtsystem 1 so beschleunigt (30 - 50 cm/s) oder abgebremst (10 - 30 cm/s) wird, daß die Tablette TB genau zwischen den Mitnehmer M und den davor liegenden Mitnehmer gelangt (dargestellt durch die Lage T2 in Figur 4b). Beschleunigt oder abgebremst werden die Gurte G1, G2 und G3 dabei synchron, sodaß die Tablette TB immer aufrecht stehen bleibt. Das ist besonders bei sehr schmalen Tabletten TB schwierig. Hat die Tablette TB die Lage T2 eingenommen, bremst der Steuer-Rechner 3 das Gurtsystem 1 ab und läßt die Tablette TB synchron mit der konstanten Umlaufgeschwindigkeit des Mitnehmersystems MS laufen (Lage T3), um sie dann endgültig zwischen den Mitnehmern M auf dem Förderband FB abzulegen. Der gesamte Regelvorgang ist nach etwa 20 - 100 ms abgeschlossen. Durch das Mitnehmersystem MS wird die Tablette TB dann auf die rotierenden Wellen RW1, RW2 gelegt. Durch LS3 wird erkannt, ob die Tablette TB im richtigen Moment von dem Mitnehmer M angestoßen wird.

Die vereinzelte Tablette TB bewegt sich weiter auf eine Durchmesserprüfung zu. Diese besteht aus zwei Laser-Kameras KMA, KMB, die nach Figur 3a und Figur 3b fest auf einem Aluminiumblock montiert und in den Punkten a), b), c), d) und e) entsprechend zu justieren sind. Die in den Meßbereich gelangte Tablette TB wird von den Kameras KMA, KMB in bestimmten Abständen automatisch vermessen und das Ergebnis an die Meßwertauswertung MSA gegeben. Ist das Tablettenende erreicht und der Meßvorgang abgeschlossen, werden die gespeicherten Werte der Tablette TB ausgewertet und das Ergebnis an den Rechner PC weitergegeben.

Danach gelangt die Tablette in den Bereich der Oberflächenkontrolle. Dieses System besteht aus der Beleuchtungseinheit BL und der Zeilenkamera KMC, die mit der Meßsystemauswertung verbunden ist. Als Beleuchtungseinheit dient ein Kaltlichterzeuger mit Lichtleitfaser und Querschnittswandler. Aus dem Querschnittswandler tritt ein Lichtband hoher Intensität aus. Das Lichtband bescheint die Oberkante der rotierenden, sich vorwärtsbewegenden Tablette TB. Das reflektierte Licht (abhängig von Rissen, Abplatzungen, usw.) wird von der Zeilenkamera KMC aufgenommen und als Signal an die Meßwertauswertung MSA weitergegeben. Da die Zeilenkamera KMC ca. 1.000 Aufnahme pro Sekunde durchführt, liegt nach einem Tablettendurchlauf (entspricht 360 °-Drehung der Tablette) die Mantelabwicklung in der Meßsystemauswertung vor. Die gespeicherten Meßwerte werden verarbeitet und das Endergebnis an den Rechner PC weitergegeben.

Das Rückweissystem besteht aus dem als Rückweisrechner arbeitenden Rechner PC und einer Ausstoßeinrichtung AM, die zwei Magnetventile mit Druckluftversorgung enthält. Im Rückweisrechner PC werden die einzelnen Tabletten nach folgenden Rückweiskriterien beurteilt:
a) eine Tablette wird zurückgewiesen, wenn der Mittelwert das Maximum über- bzw. das Minimum unterschreitet.
b) Es darf eine bestimmte Menge von Einzelmessungen (einstellbar 0 bis 10) den Maximalwert überschreiten. Liegen mehr Einzelmessungen als zulässig über dem Maximalwert, so wird die Tablette TB als MaxTablette zurückgewiesen, auch wenn der Mittelwert unter dem Maximum liegt.
c) Es darf eine bestimmte Menge von Einzelmessungen (einstellbar 0 bis 10) den Minimalwert unterschreiten. Liegen mehr Einzelmessungen als zulässig unter dem Minimalwert, so wird die Tablette TB als Min-Tablette zurückgewiesen, auch wenn der Mittelwert über dem Minimum liegt.
d) Es darf eine bestimmte Menge von Einzelmessungen (einstellbar 0 bis 10) den totalen Minimalwert unterschreiten. Die Messungen, die den Totalminimalwert unterschreiten, werden bei der Berechnung des Mittelwertes nicht berücksichtigt. Liegen mehr Einzelmessungen als zulässig unter dem Totelminimalwert, so wird die Tablette TB als Tablette mit unzulässigen Abplatzungen zurückgewiesen.
e) Ein Schwanken des Ausgangssignals an beiden Laser-Kameras KMA, KMB deutet auf einen Wankeleffekt hin. Bei gleichzeitiger Überschreitung des maximalen Sprunges beider Laser-Kameras wird die Tablette als Wankeltablette zurückgewiesen.
f) Unregelmäßigkeiten an der Oberfläche werden entsprechend den Rückweiskriterien ausgewertet.

Der Rückweisrechner PC verfolgt jede Tablette TB ab Eintritt in die Durchmesserprüfung. Die Daten der Durchmesserprüfung und der Oberflächenkontrolle werden gesammelt und entsprechend nach den oben genannten Kriterien ausgewertet; falls nötig, wird die Tablette TB mittels Ausstoßvorrichtung AM aussortiert. Die übrigen Tabletten TB gelangen zu einem Endausstoß E.

Um die Arbeit der Gesamtanlage überprüfen zu können, ist nach der Ausstoßeinrichtung AM eine weitere Lichtschranke LS4 angeordnet. Diese Lichtschranke LS4 kontrolliert, ob bei abweichenden Tabletten die Fachposition unbelegt und bei guten Tabletten die Fachposition belegt ist.

Das Meßauswertungs-System besteht im wesentlichen aus 2 Platinenrechnern:
a) Durchmesserrechner
   Dieser Rechner übernimmt die Kommunikation mit der Laserkamera KMB mittels KMA und die Auswertung der von dort ausgehenden Daten;
b) Oberflächenrechner
   Dieser Rechner übernimmt die Kommunikation mit der Zeilenkamera KMC und die entsprechende Auswertung.

Hinzu kommen:
c) Steuer-Rechner 3
   Der Rechner regelt die Tablettenvereinzelung
d) Rückweisrechner PC
   Der Rechner verfolgt jede Tablette ab Eintritt in die Durchmesserkontrolle und läßt abweichende Tabletten ausstoßen. Nach dem Ausstoß wird jedes Mitnehmerfach nochmals kontrolliert, ob Tabletten vorhanden (wenn als gut erkannt) oder ob das Fach leer ist (wenn als abweichend erkannt).

## Patentansprüche

1. Verfahren zur optischen Prüfung von Tabletten (TB), die auf zwei rotierenden Wellen (RW1, RW2) liegend um ihre eigene Achse rotierend an einem durch einen Spalt (SP) in einer der Wellen (RW1, RW2) begrenzten Gesichtsfeld vorbeigeführt, durch zwei Laser-Kameras (KMA, KMB), die gegenüber dem Spalt (SP) so in der Höhe verschoben werden, daß der Laserstrahl der ersten Laser-Kamera (KMA) die rotierenden Wellen (RW1, RW2) nicht berührt und der Laserstrahl der zweiten Laser-Kamera (KMB) bei einer eingeführten Tablette (TB) um etwa die Hälfte geämpft wird, abgetastet und Meßdaten an eine Meßwertauswertung (MSA) abgegeben werden, die die Meßdaten mit eingespeicherten Sollwerten vergleicht und das Ergebnis ausgibt, dadurch gekennzeichnet, daß
a) die Geschwindigkeit der zu einer liegenden Tablettensäule gehörenden vordersten Tablette (TB), die von einer Bearbeitungsmaschine, beispielsweise Schleifmaschine (S) kommt, mit der Geschwindigkeit eines Mitnehmers (M) eines Mitnehmersystems (MS) in einem Steuerrechner (SR) verglichen wird und entsprechend dem Ergebnis ein System von zusammenarbeitenden Gurten (G1, G2, G2), das die Tablette erfaßt, so beschleunigt wird, daß eine Tablette (TB) von einem Mitnehmer (M) hinterfaßt wird,
b) die vereinzelte Tablette (TB) durch den Mitnehmer (M) auf die beiden rotierenden Wellen (RW1, RW2) geschoben und vereinzelt durch das Gesichtsfeld geführt wird,
c) die Meßwertauswertung (MSA) das Ergebnis des Vergleichs der Meßdaten der Laser-Kameras (KMA, KMB) mit den eingespeicherten Sollwerten an einen Rechner (PC) weitergibt,
d) die Tablette (TB) in einer weiteren Beobachtungsstation von einer Beleuchtungseinheit (BL) angestrahlt wird und Bilder ihrer Oberfläche von einer Zeilenkamera (KMC) aufgenommen werden,
e) die aufgenommenen Bilder der Zeilenkamera (KMC) der Meßwertauswertung (MSA) zugeführt werden, die diese Daten mit eingespeicherten Sollwerten vergleicht und an den Rechner (PC) weitergibt,
f) die an den Rechner (PC) weitergegebenen Tablettenvergleichsdaten gesammelt werden und der Rechner (PC) fehlerfreie Tabletten (TB) zur weiteren Verwendung weitergibt, fehlerbehaftete Tabletten aussortiert und/oder die Bearbeitungsmaschine (S) so steuert, daß während der Bearbeitung beobachtete Fehler bei der Bearbeitung weiterer Tabletten abgestellt werden.

2. Verfahren nach Anspruch 1, dadurch gekennzeichnet, daß ein Obergurt (G3) des Gurtsystems die Tablette (TB) beim Einfahren immer klemmt, wenn die Tablette (TB) in V-förmig angeordneten Gurten (G1, G2) beschleunigt oder abgebremst wird, wobei der Obergurt die Geschwindigkeit der V-förmig angeordneten Gurte exakt annimmt.

3. Verfahren nach Anspruch 1, dadurch gekennzeichnet, daß mit der Zeilenkamera (KMC) eine Mantelabwicklung der Tablette (TB) aufgenommen wird.

4. Verfahren nach einem der Ansprüche 1 bis 3, dadurch gekennzeichnet, daß durch die Laser-Kamera (KMA, KMB) der Durchmesser und durch die Zeilenkamera (KMC) die Länge der Tablette erfaßt wird.

5. Verfahren nach einem der Ansprüche 1 bis 4, dadurch gekennzeichnet, daß eine hochpräzise Stahltablette als Normal ausgemessen wird und deren Abmessungen als Kalibermaße im Speicher der Meßwertauswertung (MSA) und des Rechners (PC) abgelegt werden, mit der alle Abmessungen verglichen und der wirkliche Wert errechnet wird.

6. Verfahren nach einem der Ansprüche 1 bis 5, dadurch gekennzeichnet, daß die Meßauswertung (MSA) die errechneten Werte successive an den Rechner (PC) weitergibt, der damit einen kontinuierlichen Vergleich mit den Rückweiskriterien
- Tablette mit akzeptablem Durchmesser,
- Tablette mit maximaler Überschreitung,
- Tablette mit minimaler Überschreitung,
- Tablette mit "Wankeleffekt",
- Tablette mit Abplattungen,
- Tablette mit akzeptabler Länge,
- Tablette mit Überlänge,
- Tablette mit Untermaß,
- Tablette mit Abplatzungen
innerhalb von eingegebenen Grenzenwerten beginnen kann.

7. Verfahren nach einem der Ansprüche 1 bis 6, dadurch gewennzeichnet, daß der Rechner (PC) in Abhängigkeit von den errechneten Rückweiskriterien und der Position einer Regelscheibe die Bearbeitungsmaschine (S) so verstellen kann, daß damit ein Verändern des Durchmessers der Tablette (TB) erreicht wird.

8. Vorrichtung zur optischen Prüfung
- der Oberfläche,
- der Rundheit und
- der Abmessungen
von aufeinanderfolgenden Tabletten (TB) mit
- zwei rotierenden Wellen (RW1, RW2) mit einem Spalt (SP), zwei Laser-Kameras (KMA, KMB), die gegenüber dem Spalt (SP) in den rotierenden Wellen (RW1, RW2) so angeordnet sind, daß der Laserstrahl der ersten Laser-Kamera (KMA) die vor ihr rotierende Welle (RW1, RW2) nicht berührt und der Laserstrahl der zweiten Laser-Kamera (KMB) durch die auf den rotierenden Wellen (RW1, RW2) gelegene Tablette (TB) etwa um die Hälfte gedämpft ist, und
- einer Meßwertauswertung (MSA), die mit den Laser-Kameras (KMA, KMB) verbunden ist,
dadurch gekennzeichnet, daß den Laser-Kameras (KMA, KMB) eine Vereinzelung (V) vorgeordnet ist, die aus
- einem Transportsystem (1) mit wenigstens zwei zueinander bewegbaren Flächen (G1, G2, G3),
- einem Mitnehmersystem (MS) mit einer endlosen Transportfläche (FB) und wenigstens einer darauf angeordneten Erhöhung (M), das im wesentlichen parallel zum Transportsystem (1) angeordnet ist,
- wenigstens einem Sensor (LS1; LS2), der vorzugsweise am Anfang des Transportsystems (1) oder im Bereich der Erhöhung (M) liegt, und
- einem Steuer-Rechner (3) besteht, der mit den zueinander bewegbaren Flächen (G1, G2, G3) und wenigstens einem der Sensoren (LS1; LS2) verbunden ist und derart programmiert ist, daß er das Transport- und das Mitnehmersystem (1; MS) in folgenden Schritten ansteuert:
a) Ermittlung der nächsten dem Transportsystem (1) sich zuwendenden Erhöhung (M) aus der durch die Sensoren (LS1; LS2) erkannten Position einer Tablette (TB) und der Position der Erhöhung (M) sowie der Relativgeschwindigkeit zwischen Transport- und Mitnehmersystem (1; MS);
b) Veränderung der Relativgeschwindigkeit zwischen Transport- und Mitnehmersystem (1; MS) auf einen solchen Wert, daß die erkannte Tablette (TB) im Transportsystem (1) nicht verkantet und hinter die Erhöhung (M) gelangt;
c) Einstellen einer im wesentlichen synchronen Geschwindigkeit zwischen Transport- und Mitnehmersystem (1; MS),
- daß den Laser-Kameras (KMA, KMB) eine Zeilenkamera (KMC) mit einer Beleuchtungseinheit (BL) nachgeordnet ist und
- daß die Zeilenkamera (KMC) an die Meßwertauswertung (MSA) angeschlossen ist, und die Meßwertauswertung (MSA) sowie ein Meßtaster für die Position einer Regelscheibe (PR) und ein Auswertegerät (AW) mit einem Rechner (PC) verbunden sind.

9. Vorrichtung nach Anspruch 8, dadurch gekennzeichnet, daß das Mitnehmersystem (MS) unter dem Transportsystem (1) angeordnet ist.

10. Vorrichtung nach Anspruch 8 und 9, dadurch gekennzeichnet, daß das Transportsystem ein Gurtsystem (1) ist, in dem als zueinander bewegbare Flächen Gurte (G1, G2, G3) angeordnet sind.

11. Vorrichtung nach Anspruch 8 bis 10, dadurch gekennzeichnet, daß das Mitnehmersystem (MS) aus einem als Transportfläche ausgebildeten Förderband (FB) und darauf als Erhöhung befestigten Mitnehmern (M) besteht.

12. Vorrichtung nach wenigstens einem der Ansprüche 8 bis 11, dadurch gekennzeichnet, daß die Mitnehmer (M) auf dem Förderband (FB) in definierten Abständen angeordnet sind.

13. Vorrichtung nach wenigstens einem der Ansprüche 8 bis 12, dadurch gekennzeichnet, daß der erste Sensor (LS1) am Anfang des Gurtsystems (1) und der zweite Sensor (LS2) im Bereich der Mitnehmer (M) angeordnet ist.

14. Vorrichtung nach Anspruch 8, dadurch gekennzeichnet, daß der Rechner (PC) mit einer Ausstoßvorrichtung (AM) verbunden ist, die vorzugsweise aus zwei Magnetventilen mit Druckluftversorgung besteht.

## Claims

1. A method for the visual checking of tablets (TB), which, lying on two rotating shafts (RW1, RW2) and rotating about their own axis, are moved past a field of view defined by a gap (SP) in one of the shafts (RW1, RW2), are scanned by two laser cameras (KMA, KMB) which are offset in height relative to the gap (SP) such that the laser beam of the first laser camera (KMA) does not touch the rotating shafts (RW1, RW2) and the laser beam of the second laser camera (KMB) is attenuated by about half when a tablet (TB) is introduced and measurement data are supplied to a measured-value evaluation means (MSA) which compares the measurement data with stored desired values and outputs the result,
characterised in that
a) the speed of the foremost tablet (TB) belonging to a horizontal column of tablets, which comes from a processing machine, for instance a grinding machine (S), is compared with the speed of a driver (M) of a driver system (MS) in a control computer (SR) and corresponding to the result a system of cooperating belts (G1, G2, G2) which grips the tablet is accelerated such that a tablet (TB) is gripped from behind by a driver (M),
b) the separated tablet (TB) is pushed by the driver (M) on to the two rotating shafts (RW1, RW2) and is guided separately through the field of view,
c) the measured-value evaluation means (MSA) passes the result of the comparison of the measurement data of the laser cameras (KMA, KMB) with the stored desired values to a computer (PC),
d) the tablet (TB) is illuminated by an illumination unit (BL) in an additional observation station and pictures of its surface are recorded by a line-scanning camera (KMC),
e) the recorded pictures of the line-scanning camera (KMC) are fed to the measured-value evaluation means (MSA), which compares these data with stored desired values and passes them on to the computer (PC),
f) the tablet comparison data passed on to the computer (PC) are collected and the computer (PC) passes on faultless tablets (TB) for further use, sorts out faulty tablets and/or controls the processing machine (S) such that faults observed during processing are prevented during the processing of further tablets.

2. A method according to Claim 1, characterised in that an upper belt (G3) of the belt system always grips the tablet (TB) upon running-in if the tablet (TB) is accelerated or braked in belts (G1, G2) arranged in a V-shape, with the upper belt exactly adopting the speed of the belts arranged in a V-shape.

3. A method according to Claim 1, characterised in that a convex-surface layout of the tablet (TB) is recorded with the line-scanning camera (KMC).

4. A method according to one of Claims 1 to 3, characterised in that the diameter of the tablet is detected by the laser camera (KMA, KMB) and the length of the tablet by the line-scanning camera (KMC).

5. A method according to one of Claims 1 to 4, characterised in that a high-precision steel tablet is measured as standard and the dimensions thereof are stored as calibre measurements in the memory of the measured-value evaluation means (MSA) and of the computer (PC), with which measurements all dimensions are compared and the actual value is calculated.

6. A method according to one of Claims 1 to 5, characterised in that the measured-value evaluation means (MSA) passes on the values calculated successively to the computer (PC), which can thus begin a continuous comparison with the rejection criteria:
- tablet with acceptable diameter,
- tablet with maximum exceeded,
- tablet with minimum exceeded,
- tablet with "vacillating" effect,
- tablet with flattened sections,
- tablet with acceptable length,
- tablet with excessive length,
- undersized tablet,
- tablet with flaking,
within entered limit values.

7. A method according to one of Claims 1 to 6, characterised in that the computer (PC) can adjust the processing machine (S) as a function of the calculated rejection criteria and the position of a control disc such that a change in the diameter of the tablet (TB) is achieved thereby.

8. An apparatus for the visual checking of
- the surface,
- the roundness and
- the dimensions
of successive tablets (TB), with
- two rotating shafts (RW1, RW2) with a gap (SP), two laser cameras (KMA, KMB) which are arranged relative to the gap (SP) in the rotating shafts (RW1, RW2) such that the laser beam of the first laser camera (KMA) does not touch the shaft (RW1, RW2) rotating in front of it and the laser beam of the second laser camera (KMB) is attenuated by about half by the tablet (TB) laid on the rotating shafts (RW1, RW2), and
- a measured-value evaluation means (MSA) which is connected to the laser cameras (KMA, KMB),
characterised in that the laser cameras (KMA, KMB) are preceded by a separating means (V), which consists of
- a transport system (1) having at least two surfaces (G1, G2, G3) which are movable relative to each other,
- a driver system (MS) with an endless transport surface (FB) and at least one raised part (M) located thereon, which is arranged substantially parallel to the transport system (1),
- at least one sensor (LS1; LS2), which is preferably located at the start of the transport system (1) or in the region of the raised part (M), and
- a control computer (3) which is connected to the surfaces (G1, G2, G3) which can be moved relative to each other and at least one of the sensors (LS1; LS2), and is programmed such that it drives the transport and the driver system (1; MS) in the following steps:
a) determination of the next raised part (M) moving towards the transport system (1) from the position of a tablet (TB) recognised by the sensors (LS1; LS2) and the position of the raised part (M) and the relative speed of the transport and the driver system (1; MS);
b) changing of the relative speed between the transport and driver system (1; MS) to such a value that the tablet (TB) recognised does not tilt and pass behind the raised part (M) in the transport system (1);
c) setting of a substantially synchronous speed between the transport and driver system (1; MS),
- that a line-scanning camera (KMC) with an illumination unit (BL) succeeds the laser cameras (KMA, KMB) and
- that the line-scanning camera (KMC) is connected to the measured-value evaluation means (MSA), and the measured-value evaluation means (MSA) and a measuring sensor for the position of a control disc (PR) and an evaluation apparatus (AW) are connected to a computer (PC).

9. An apparatus according to Claim 8, characterised in that the driver system (MS) is located beneath the transport system (1).

10. An apparatus according to Claims 8 and 9, characterised in that the transport system is a belt system (1) in which belts (G1, G2, G3) are arranged as surfaces which can move relative to each other.

11. An apparatus according to Claims 8 to 10, characterised in that the driver system (MS) consists of a conveyor belt (FB) designed as a transport surface and drivers (M) attached thereto as raised parts.

12. An apparatus according to at least one of Claims 8 to 11, characterised in that the drivers (M) are located on the conveyor belt (FB) at defined intervals.

13. An apparatus according to at least one of Claims 8 to 12, characterised in that the first sensor (LS1) is located at the start of the belt system (1) and the second sensor (LS2) in the region of the drivers (M).

14. An apparatus according to Claim 8, characterised in that the computer (PC) is connected to an ejection device (AM), which preferably consists of two solenoid valves with a compressed-air supply.

## Revendications

1. Procédé pour le contrôle visuel de pastilles (TB) qui, à plat sur deux arbres rotatifs (RW1, RW2) et tournant autour de leur propre axe, sont déplacées devant un champ visuel délimité par une fente (SP) dans l'un des arbres (RW1, RW2), sont balayées par deux caméras laser (KMA, KMB) qui sont déplacées en hauteur par rapport à la fente (SP) de sorte que le rayon laser de la première caméra laser (KMA) ne touche pas les arbres rotatifs (RW1, RW2) et que le rayon laser de la deuxième caméra laser (KMB) soit amorti d'environ la moitié lorsqu'une pastille (TB) est introduite et dans lequel des données de mesure sont délivrées à un dispositif d'exploitation de données de mesure (MSA) qui compare les données de mesure à des valeurs de consigne mémorisées et délivre le résultat,
caractérisé par le fait que
a) la vitesse de la pastille (TB) qui est située la plus en avant dans une pile de pastilles couchée et provient d'une machine d'usinage, par exemple d'une rectifieuse, est comparée à la vitesse d'un entraîneur (M) d'un système d'entraînement (MS) dans un calculateur de commande (SR) et qu'en fonction du résultat, un système de courroies (G1, G2, G3) interactives qui saisit la pastille, est accéléré de sorte qu'un entraîneur (M) saisit la pastille (TB) par derrière,
b) la pastille (TB) isolée est poussée par l'entraîneur (M) sur les deux arbres rotatifs (RW1, RW2) et est guidée seule à travers le champ visuel,
c) le dispositif d'exploitation de données de mesure (MSA) transmet à un calculateur (PC) le résultat de la comparaison des données de mesure des caméras laser (KMA, KMB) avec les valeurs de consigne mémorisées,
d) la pastille (TB) est éclairée dans un poste d'observation par une unité d'éclairage (BL) et des images de sa surface sont prises par une caméra de balayage horizontal (KMC),
e) les images prises par la caméra de balayage horizontal (KMC) sont transmises au dispositif d'exploitation de données de mesure (MSA) qui compare ces données à des valeurs de consigne mémorisées et transmet le résultat au calculateur (PC),
f) les données de comparaison de la pastille transmises au calculateur (PC) sont rassemblées et le calculateur (PC) laisse passer les pastilles (TB) sans défauts en vue d'un traitement ultérieur, élimine les pastilles défectueuses et/ou commande la machine d'usinage (S) de sorte que des défauts constatés pendant le traitement soient corrigés lors du traitement d'autres pastilles.

2. Procédé selon la revendication 1, caractérisé par le fait qu'une courroie supérieure (G3) du système de courroies bloque toujours la pastille (TB) lors de l'entrée lorsque la pastille (TB) est accélérée ou freinée dans des courroies (G1, G2) disposées en V, la courroie supérieure adoptant exactement la vitesse des courroies disposées en V.

3. Procédé selon la revendication 1, caractérisé par le fait qu'un développement de l'enveloppe de la pastille (TB) est réalisé avec la caméra de balayage horizontal (KMC).

4. Procédé selon l'une des revendications 1 à 3, caractérisé par le fait que les caméras laser (KMA, KMB) déterminent le diamètre et la caméra de balayage horizontal (KMC) la longueur de la pastille.

5. Procédé selon l'une des revendications 1 à 4, caractérisé par le fait qu'une pastille en acier très précise constituant la normale est mesurée et que ses dimensions sont entrées en tant que grandeur étalon dans la mémoire du dispositif d'exploitation de valeurs de mesure (MSA) et du calculateur (PC), toutes les dimensions étant comparées à cette grandeur étalon et la valeur réelle étant calculée.

6. Procédé selon l'une des revendications 1 à 5, caractérisé par le fait que le dispositif d'exploitation de valeurs de mesure (MSA) transmet successivement les valeurs calculées au calculateur (PC) qui peut alors, à l'intérieur de valeurs limite entrées, débuter une comparaison avec les critères de rejet
- pastille de diamètre acceptable,
- pastille présentant un dépassement maximal,
- pastille présentant un dépassement minimal,
- pastille avec "effet de vacillement"
- pastille présentant des aplatissements,
- pastille de longueur acceptable,
- pastille de longueur excessive,
- pastille de dimensions inférieures à la cote prescrite,
- pastille comportant des éclats.

7. Procédé selon l'une des revendications 1 à 6, caractérisé par le fait que le calculateur (PC) peut, en fonction des critères de rejet calculés et de la position d'un disque de réglage, déplacer la machine d'usinage (S) de manière à modifier le diamètre de la pastille (TB).

8. Dispositif pour le contrôle visuel
- de la surface,
- de la rondeur, et
- des dimensions de pastilles (TB) successives comportant
- deux arbres rotatifs (RW1 RW2) avec une fente (SP), deux caméras laser (KMA, KMB) qui sont disposées par rapport à la fente (SP) dans les arbres rotatifs (RW1, RW2) de sorte que le rayon laser de la première caméra laser (KMA) ne touche pas l'arbre (RW1, RW2) qui tourne devant elle et que le rayon laser de la deuxième caméra laser (KMB) est amorti d'environ la moitié par la pastille (TB) placée sur les arbres rotatifs (RW1, RW2), et
- un dispositif d'exploitation de valeurs de mesure (MSA) qui est relié aux caméras laser (KMA, KMB), caractérisé par le fait qu'un dispositif d'isolement (V) est monté en amont des caméras laser (KMA, KMB), lequel dispositif comprend
- un système de transport (1) avec au moins deux surfaces (G1, G2, G3) mobiles les unes par rapport aux autres,
- un système d'entraînement (MS) avec une surface de transport (FB) sans fin et au moins une saillie (M) disposée dessus, lequel système d'entraînement est disposé sensiblement parallèlement au système de transport (1),
- au moins un détecteur (LS1 ; LS2) qui se trouve de préférence au début du système de transport (1) ou dans la région de la saillie (M), et
- un calculateur de commande (3) qui est relié aux surfaces (G1, G2, G3) mobiles les unes par rapport aux autres et à au moins l'un des détecteurs (LS1 ; LS2) et est programmé de manière à commander le système de transport (1) et le système d'entraînement (MS) selon les étapes suivantes :
a) détermination de la saillie (M) la plus proche tournée vers le système de transport (1) à partir de la position d'une pastille (TB) déterminée par les détecteurs (LS1 ; LS2) et de la position de la saillie (M) ainsi que de la vitesse relative entre le système de transport (1) et le système d'entraînement (MS) ;
b) modification de la vitesse relative entre le système de transport (1) et le système d'entraînement (MS) pour l'amener à une valeur telle que la pastille (TB) détectée ne se bloque pas dans le système de transport (1) et se place derrière la saillie (M) ;
c) réglage d'une vitesse sensiblement synchrone entre le système de transport (1) et le système d'entraînement (MS),
- qu'une caméra de balayage horizontal (KMC) équipée d'une unité d'éclairage (BL) est montée en aval des caméras laser (KMA, KMB), et
- que la caméra de balayage horizontal (KMC) est raccordée au dispositif d'exploitation de valeurs de mesure (MSA) et le dispositif d'exploitation de valeurs de mesure (MSA) ainsi qu'un capteur de mesure pour la position d'un disque de réglage (PR) et un appareil d'exploitation (AW) sont reliés à un calculateur (PC).

9. Dispositif selon la revendication 8, caractérisé par le fait que le système d'entraînement (MS) est disposé sous le système de transport (1).

10. Dispositif selon les revendications 8 et 9, caractérisé par le fait que le système de transport est un système de courroies (1) dans lequel sont disposées des courroies (G1, G2, G3) formant des surfaces mobiles les unes par rapport aux autres.

11. Dispositif selon les revendications 8 à 10, caractérisé par le fait que le système d'entraînement (MS) est constitué d'une bande transporteuse (FB) réalisée sous forme de surface de transport et d'entraîneurs (M) fixés sur ladite bande sous forme de saillies.

12. Dispositif selon au moins l'une des revendications 8 à 11, caractérisé par le fait que les entraîneurs (M) sont disposés à des écartements définis sur la bande transporteuse (FB).

13. Dispositif selon au moins l'une des revendications 8 à 12, caractérisé par le fait que le premier détecteur (LS1) est disposé au début du système de courroies (1) et que le deuxième détecteur (LS2) est disposé dans la région des entraîneurs (M).

14. Dispositif selon la revendication 8, caractérisé par le fait que le calculateur (PC) est relié à un dispositif d'éjection (AM) qui est de préférence constitué par deux vannes magnétiques alimentées en air comprimé.
